# EUROPEAN PATENT SPECIFICATION

(11) **EP 3 601 012 B1**
(45) Date of publication and mention of the grant of the patent: **10.08.2022**
(21) Application number: 18716346.4
(22) Date of filing: 19.03.2018
(51) Int. Cl.: B62B 7/06

(54) **FOLDING FRAME FOR STROLLERS, BABY CARRIAGES OR THE LIKE**
FALTRAHMEN FÜR KINDERWÄGEN ODER DERGLEICHEN
CADRE PLIANT POUR POUSSETTES, LANDAUS OU SIMILAIRES

(30) Priority: 20.03.2017 IT 201700030151
(43) Date of publication of application: 05.02.2020
(73) Proprietor: L'Inglesina Baby S.p.A., 36077 Altavilla Vicentina (IT)
(72) Inventor: TOMASI, Ivan, 36051 Creazzo (IT); GORZA, Roberto, 32034 Pedavena (IT)
(74) Representative: Modiano, Micaela Nadia
(86) International application number: PCT/IB2018/051824
(87) International publication number: WO 2018/172912

(56) References cited:
- EP-A2- 1 232 927
- WO-A1-2004/074070
- WO-A1-2014/097217
- WO-A1-2017/009345

## Description

The present invention relates to a folding frame for strollers, baby carriages and the like.

Folding frames for strollers or baby carriages are known which are essentially constituted by a lower framework, which comprises one or two front posts and one or two rear posts, which support in a downward region respective wheel assemblies, and by at least one upper post, known in the jargon as "handle tube", which ends in an upward region with the grip element or handle of the frame and can move with respect to the lower framework.

In some cases, in order to allow execution of the closure and opening of the frame, the handle tube or tubes move, with respect to the front posts, with an exclusively translational motion (which is typically parallel to the direction of extension of the front posts), with a combined rotary and translational motion, or with a rotary motion.

With particular reference to so-called clamshell folding frames, a typical constructive solution provides for the front and rear posts to be mutually hinged about an articulation axis while the handle tube or tubes are kinematically connected by means of at least one connecting linkage and/or translation sleeves to the front post.

Kinematic interconnection means are interposed between the front posts and the rear posts and are constituted by at least one upper tension member which connects the rear post or posts to the front post or posts, while it is possible to provide furthermore one or more lower guiding tension members which connect the rear posts to the handle tubes.

These constructive solutions allow, during the step for closure of the frame, to move the front posts to a position that is angularly closer to the respective rear posts while the handle tubes, by virtue of a combined rotary and translational motion or a translational motion, arrange themselves, in the closed condition, in a position that is closer to the front posts with the grip element spaced from the wheels.

The locking of the frame in the open condition is ensured by locking means which act for example between the handle tube and the respective front post in the contact region.

The release of the locking means is typically performed by the user by acting on actuation means which are arranged on the handle tubes or at the grip element.

The frames briefly described above, despite being widely used, however are not free from drawbacks.

In particular, a certain difficulty is observed in following the frame from the open condition to the closed condition and vice versa. EP 1 232 927 A2, on which the preamble of claim 1 is based, describes an umbrella-type folding frame. Other similar folding frames are disclosed in WO 2004/074070 A1 and in WO 2014/097217 A1.

The aim of the present invention is to provide a folding frame for strollers, baby carriages and the like that is capable of improving the background art in one or more of the aspects indicated above.

Within this aim, an object of the invention is to provide a folding frame for strollers, baby carriages and the like that is highly reliable, relatively easy to provide and at competitive costs.

This aim, and these and other objects which will become better apparent hereinafter, are achieved by a folding frame for strollers, baby carriages and the like according to claim 1, optionally provided with one or more of the characteristics of the dependent claims.

Further characteristics and advantages of the invention will become better apparent from the description of some preferred but not exclusive embodiments of the folding frame for strollers, baby carriages and the like according to the invention, illustrated by way of nonlimiting example in the accompanying drawings, wherein:
Figure 1 is a lateral elevation view of a folding frame for strollers, baby carriages or the like according to the invention in the extended condition;
Figure 2 is a side view of a portion of the frame of Figure 1, with regions shown in cross-section and others shown schematically for greater clarity;
Figure 3 is a sectional view, taken along the plane of arrangement defined by the plane III-III of Figure 2;
Figure 4 is a lateral elevation view of a folding frame according to the invention in a first intermediate closure position;
Figure 5 is a lateral view of a portion of the frame of Figure 4, with regions shown in cross-section and others shown schematically for greater clarity;
Figure 6 is a sectional view, taken along the plane of arrangement designated by the outline VI-VI of Figure 5;
Figure 7 is a lateral elevation view of a folding frame according to the invention in a second intermediate closure position;
Figure 8 is a side view of a portion of the frame of Figure 7 with regions shown in cross-section and others shown schematically for greater clarity;
Figure 9 is a sectional view, taken along the plane of arrangement designated by the outline IX-IX of Figure 8;
Figure 10 is a lateral elevation view of a folding frame according to the invention in a third intermediate closure position;
Figure 11 is a view of the frame in the closed condition;
Figure 12 is a lateral elevation view of a folding frame according to the invention in an intermediate open condition;
Figure 13 is a lateral view of a portion of the frame of Figure 12, with regions shown in cross-section and others shown schematically for greater clarity;

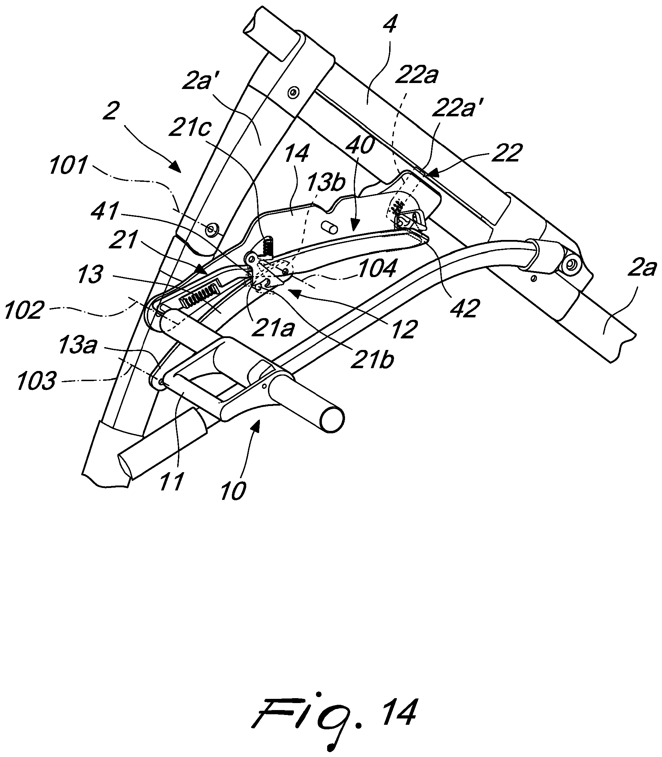

Figure 14 is a perspective view of a portion of the folding frame.

With reference to the figures, the folding frame for strollers, baby carriages or the like according to the invention, designated generally by the reference numeral 1, comprises a lower framework 2 which has at least one front post 2a and at least one rear post 2b which are connected in a downward region to respective wheel assemblies 3a, 3b.

Advantageously, the lower framework 2 is provided with two rear posts 2b, and in the specific case a right rear post and a left rear post, and two front posts 2a, in particular a right front post and a left front post.

The or each rear post 2b can move on command, with respect to the front post or posts 2a, with a rotary motion about a first articulation axis 101, which is substantially transverse to the direction of longitudinal extension 100 of the folding frame 1 during the transition of the folding frame 1 from an extended or open condition to a collapsed or closed condition and vice versa.

According to a preferred embodiment, the or each rear post 2b can move on command with respect to a coupling body 2a' which is integral with the respective front post 2a.

The lower framework 2 is connected kinematically to at least one handle tube 4, which is associated with or forms at least one upper grip element 5.

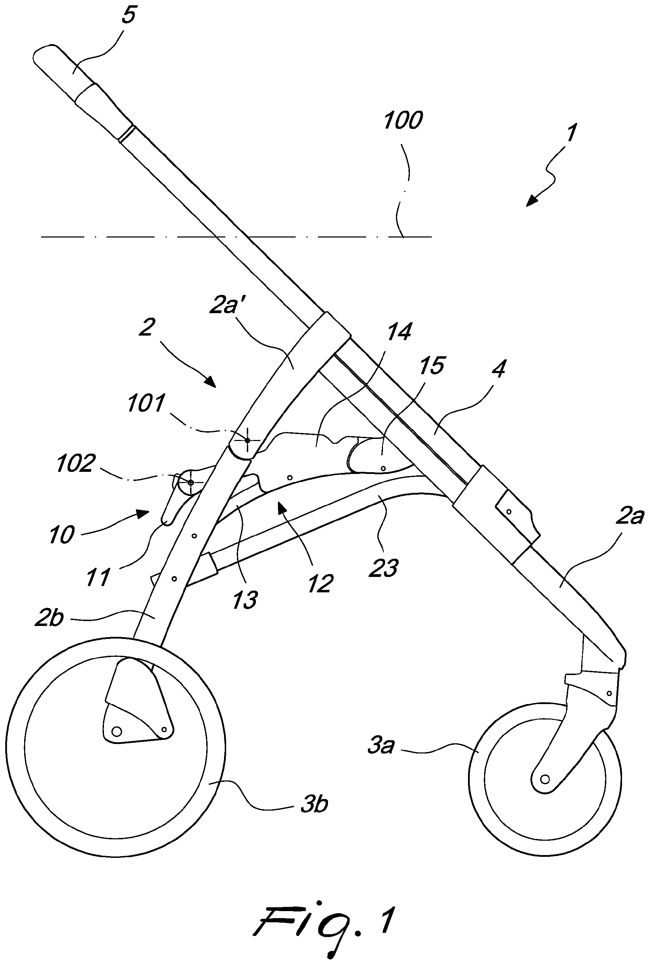

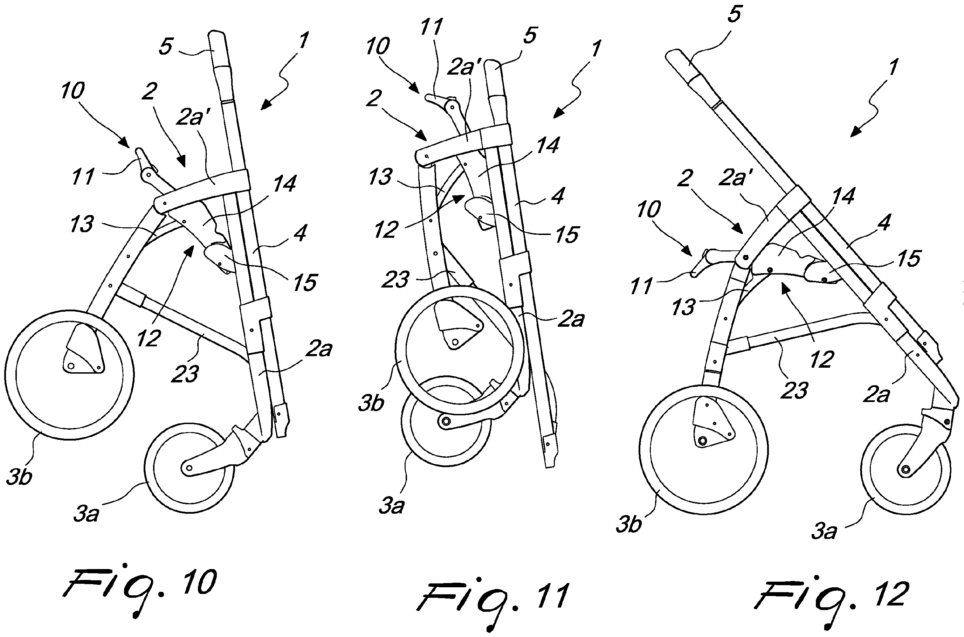

The or each handle tube 4 can move with respect to the respective front post 2a along a movement trajectory which has at least one component that is parallel to the direction of main extension of the front post 2a, in order to move between an active condition (shown for example in Figure 1), in which the upper grip element 5 is spaced and arranged upward with respect to the end portion that is uppermost during use of the lower framework 2, and an inactive condition (shown in Figure 11), in which the upper grip element 5 is arranged closer to the end portion that is uppermost during use of the lower framework 2.

According to the present invention, the lower framework 2 supports an actuation device 10 which has an actuation grip element 11, which can move on command between a first position and a second position.

The actuation device 10 is connected kinematically to at least one device 12 for interconnection between at least one rear post 2b and at least one respective front post 2a in order to pass, as a consequence of the transition of the actuation grip element 11 between the first position and the second position, between an extended position, in which the respective front and rear posts (2a, 2b) are kept angularly spaced, and a folded position, in which the respective front and rear posts (2a, 2b) are kept angularly closer.

The folding frame 1 furthermore comprises at least one first body 21 for locking the interconnection device 12 in the extended position and at least one second locking body 22.

The first locking body 21 is connected kinematically to the actuation grip element 11.

The second locking body 22 is adapted to act between a front post 2a and the respective handle tube 4 in order to keep the handle tube 4 locked with respect to the front post 2a in the active position.

In particular, the second locking body 22 is adapted to keep in the active position the handle tube 4 at least when the interconnection device 12 is in the extended position.

According to possible practical embodiments, in the transition of the folding frame 1 from the collapsed or closed condition toward the extended or open condition, it is possible to activate initially the second locking body 22 and then the first locking body 21; however, nothing prevents the first locking body 21 and the second locking body 22 from being activated simultaneously or the first locking body 21 from being activated before the second locking body 22.

Preferably but not necessarily, the folding frame 1 comprises at least one element 23 for interconnection between each rear post 2b and the respective handle tube 4, said interconnection element 23 being adapted to cause the movement of the handle tube 4 between the inactive position and the active position and vice versa as a consequence of the transition of the interconnection device 12 between the extended condition and the folded condition and vice versa.

Conveniently, the actuation grip element 11 is supported by the interconnection device 12.

In particular, the actuation grip element 11 is supported directly by the interconnection device 12.

According to a preferred embodiment, the actuation grip element 11 is supported by the interconnection device 12 so that it can rotate about a second articulation axis 102 which is substantially parallel to the first articulation axis 101.

The interconnection device 12 comprises a toggle device which comprises a first connecting body 13 and a second connecting body 14.

The first connecting body 13 has a first end 13a which is pivoted, about a third articulation axis 103 which is substantially parallel to the first articulation axis 101, to a respective rear post 2b, and a second end 13b, which is pivoted to the second connecting body 14 about a fourth articulation axis 104 which is substantially parallel to the third articulation axis 103.

In turn, the second connecting body 14 is supported rotatably, about a fifth articulation axis 105 which is substantially parallel to the third and fourth articulation axes 104 and 105, by the respective front post 2a.

The second connecting body 14 is supported, so that it can rotate about the fifth articulation axis 105, by a coupling body 15 which is integral with a front post 2a.

The first locking body 21 is adapted to lock the rotation of the first connecting body 13 with respect to the second connecting body 14, thus providing a rigid connection between the respective front posts 2a and rear posts 2b.

By way of example, the first locking body 21 comprises a hook 21a which is supported by the second connecting body 14 and is adapted to pass between an uncoupling condition and a coupling condition with respect to a respective abutment 21b which is supported by the first connecting body 13 following the transition of the interconnection device 12 between the folded condition and the extended condition and vice versa.

Preferably, there are first automatic means for the actuation of the hook 21a, which comprise for example an elastic loading device 21c, which are adapted to determine the transition of the hook 21a from the uncoupling condition to the coupling condition with the respective abutment 21b when a preset relative angular position is reached between the first connecting body 13 and the second connecting body 14.

Advantageously, the second locking body 22 comprises at least one locking pin 22a.

The locking pin 22a is supported appropriately by the coupling body 15 and is adapted to pass between a condition of disengagement with respect to the respective handle tube 4 and a position of engagement with the respective handle tube 4.

The transition of the locking pin 22a from the disengagement condition to the engagement position is performed during the transition of the folding frame 1 between the closed condition and the open condition.

Nothing forbids, of course, providing different types of kinematic connection means between the actuation grip element 11 and the locking pin 22a, such as for example a cable.

In particular, the locking pin 22a is supported so that it can slide by the coupling body 15 so that it can move along a sliding direction 201.

Conveniently, the sliding direction 201 is extended substantially at right angles to the direction of extension of the respective front post 2a.

The locking pin 22a is partially accommodated slidingly within a first seat that is formed on the respective front post 2a and is provided with an engagement head 22a', which is designed, in the engagement position (shown for example in Figure 1), to enter a second seat which is integral with the respective handle tube 4 in order to render the handle tube 4 integral with the respective front post 2a, at least when the interconnection device 12 is moved into the extended condition.

Preferably, there are second automatic means for the actuation of the locking pin 22a, which comprise for example an elastic loading device 22c and are designed to act on the locking pin 22a in order to apply such an action as to push the engagement head 22a' toward the second seat.

According to a preferred embodiment, the actuation grip element 11 is connected kinematically to the second connecting body 14.

By way of example, the actuation grip element 11 is connected kinematically to an elongated pusher body 40.

In particular, the pusher body 40 has a first end 40a which is associated rotatably, in an eccentric manner with respect to the second articulation axis 102, with the actuation grip element 11 and a second end 40b which is associated with, and connected kinematically to, the second locking body 22.

Along the extension of the pusher body 40 there is furthermore an element 41 for engagement with the first locking body 21.

By way of example, the engagement element 41 comprises a protrusion which is arranged laterally adjacent to the hook 21a and is designed, when the actuation grip element 11 is moved from the first position toward the second position (which in the views shown in the figures corresponds to a clockwise upward rotation), to act on the hook 21a in contrast with the action of the first elastic loading device 21c in order to disengage the hook 21a from the abutment 21b, so as to consequently allow the relative rotation between the rear post 2b and the first connecting body 13 about the third articulation axis 103 and between the first connecting body 13 and the second connecting body 14 about the fourth articulation axis 104.

At the second end 40b, the pusher body 40 is provided with an inclined portion 42 which engages a rocker element 43 so that when the actuation grip element 11 is moved from the first position toward the second position (which in the views shown in the figures corresponds to a clockwise upward rotation), a traction is applied to the locking pin 22 in contrast with the action of the second elastic loading device 22c in order to disengage the engagement head 22a' from the second seat formed on the respective handle tube 4, so as to allow consequently the movement of the or each handle tube 4 with respect to the respective front post 2a and therefore the transition of the handle tubes from the active condition to the inactive position.

The use of a folding frame 1 according to the invention is evident from what has been described above.

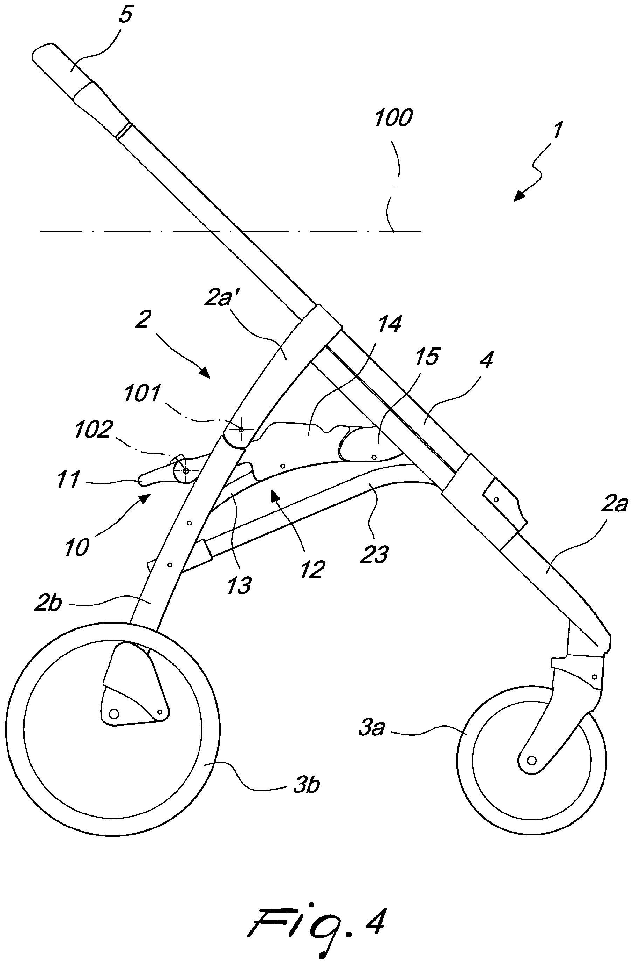

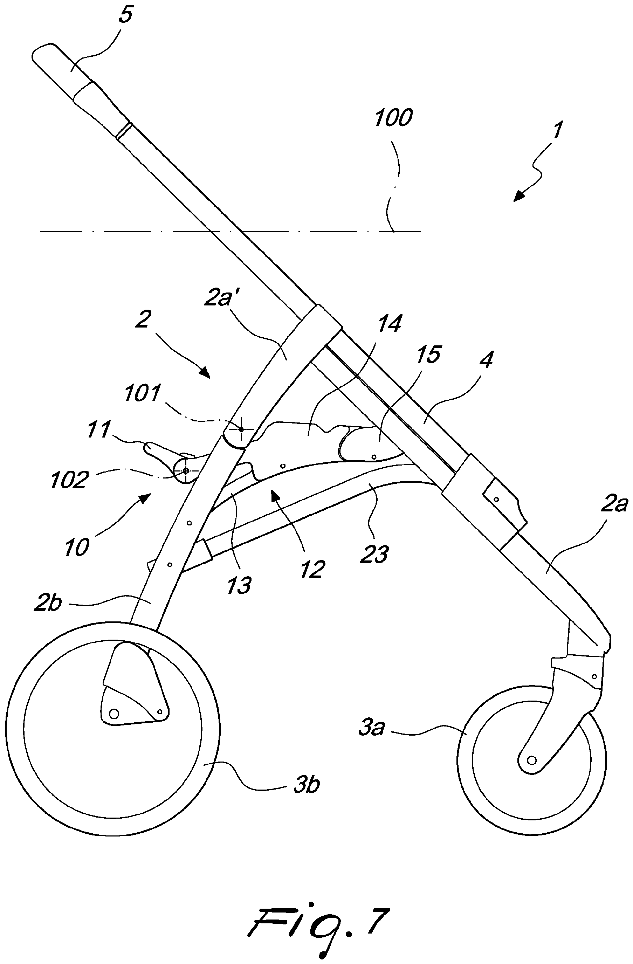

In particular, the transition from the extended open condition toward the collapsed closed condition is shown in the sequence of Figures 1 to 11.

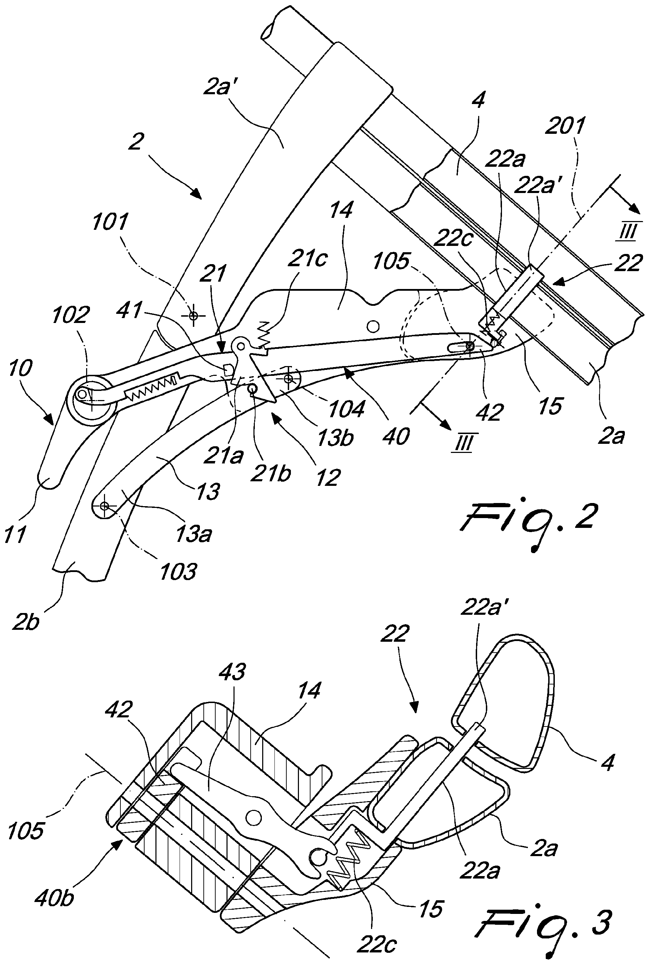

In the extended open condition, shown in Figures 1 and 2, the interconnection device 12 rigidly mutually connects the rear posts 2b to the respective front posts 2a by virtue of the action of the first locking body 21, which prevents relative rotation between the first connecting body 13 and the second connecting body 14.

The second locking body 22 furthermore acts between the front post 2a and the respective handle tube 4, ensuring that each handle tube is maintained in the active position.

By actuating the actuation grip element 11 by means of for example a rotation, with reference to the views shown in the figures, clockwise, the pusher body 40 moves along a substantially longitudinal direction toward the respective front post 2a.

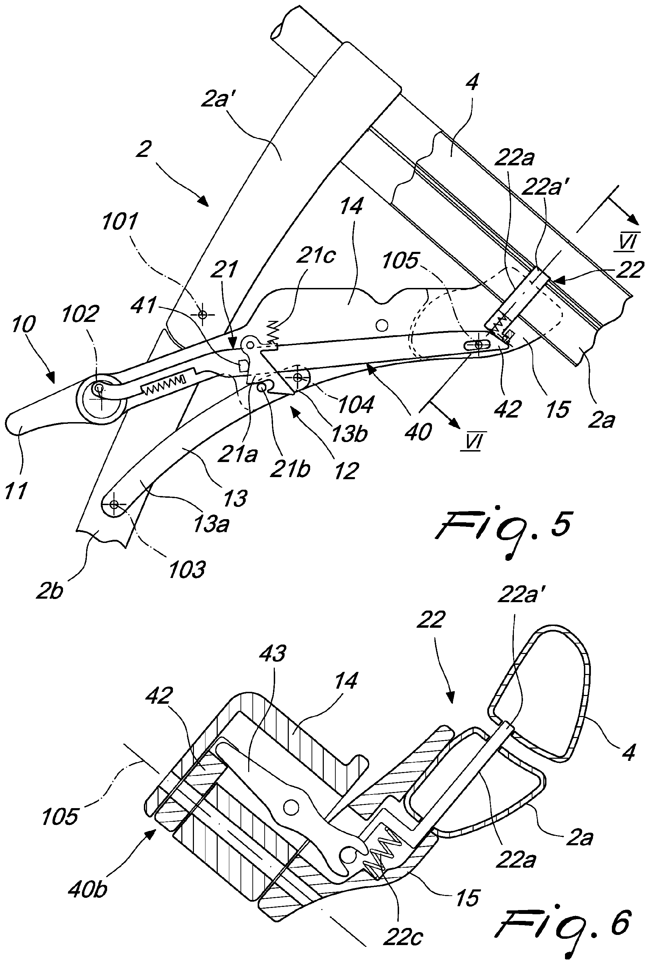

In this manner, the engagement element 41 disengages the hook 21a from the abutment 21b (Figure 5), allowing relative rotation between the first connecting body 13 and the second connecting body 14 about the fourth articulation axis, causing the angular approach between the front posts 2a and the rear posts 2b.

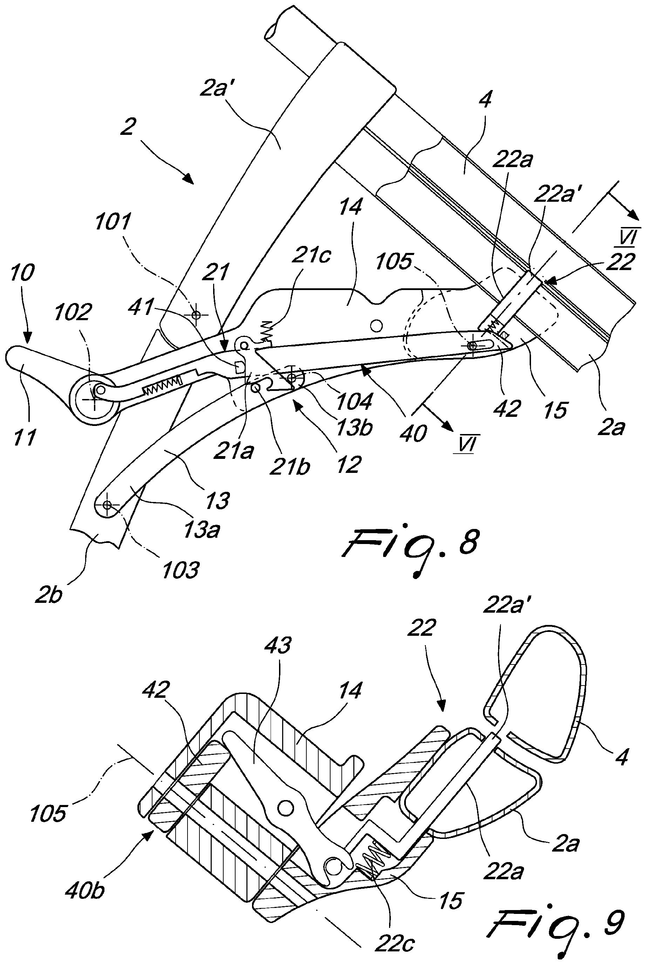

The advancement toward the front post 2a of the second end 40b of the pusher body 40 furthermore causes the downward rotation of the rocker 42 and the simultaneous disengagement of the engagement head 22a' from the respective handle tube 4 (Figure 8) and therefore the simultaneous transition of the handle tubes toward the inactive position (Figure 10 and Figure 11).

The weight itself of the wheel assemblies, of the front and rear posts and of the handle tubes facilitates the collapse of the frame, while it is lifted by the actuation grip element 11.

In particular, if the folding frame 1 is provided with the interconnection element 23, the movement by gravity of the handle tubes 4 from the active condition to the inactive condition in practice draws the rear posts 2b angularly closer to the respective front posts.

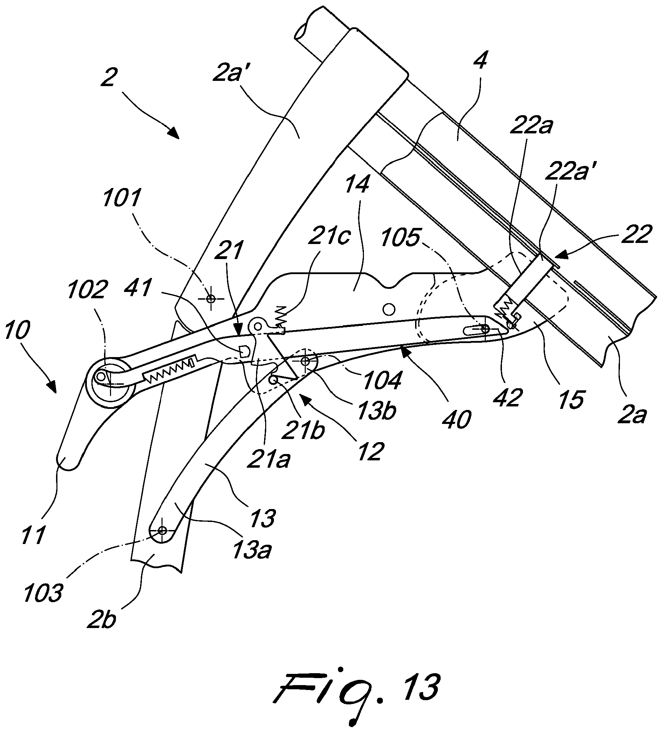

The transition of the folding frame 1 from the collapsed closed condition toward the extended open condition is shown in Figures 12 and 13.

After deactivating, if present, means for maintaining the folding frame 1 in the collapsed closed condition, the user lifts upward the handle tubes 4, moving them toward the active condition.

The presence of the interconnection element 23 facilitates the angular spacing between the front posts 2a and the rear posts 2b, moving into extension the interconnection device 12.

The engagement head 22a' presses, as a consequence of the action of the second elastic loading device 22c, toward the handle tube 4 and the first elastic loading device 21c acts on the hook 21c in order to allow its automatic engagement with the abutment 21b once the open condition has been reached.

Preferably, the interconnection device 12 also forms one or more coupling seats with a receptacle for accommodating a child, typically a stroller, a baby carriage or a car seat.

The weight applied by the receptacle coupled to the interconnection device furthermore produces a force that tends to move mutually apart the front posts 2a and the rear posts 2b, consequently ensuring the correct engagement of the hook 21a with the abutment 21b and of the engagement head 22a' with the second seat provided in the handle tube 4.

In practice it has been found that the invention achieves the proposed aim and objects, providing a folding frame for stroller, baby carriages or the like that passes easily from the open condition to the closed condition and vice versa.

The invention thus conceived is susceptible of numerous modifications and variations, all of which are within the scope of the appended claims.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A folding frame (1) for strollers, baby carriages or the like, comprising a lower framework (2) provided with at least one front post (2a) and at least one rear post (2b) which are connected in a lower region to respective wheel assemblies (3a, 3b), said at least one rear post (2b) being movable on command, with respect to said at least one front post (2a), with a rotary motion about a first articulation axis (101) that is substantially transverse to the direction of longitudinal extension (100) of said folding frame (1) during the transition of said folding frame (1) from an extended open condition to a collapsed closed condition and vice versa, said lower framework (2) being connected kinematically to at least one handle tube (4) which forms at least one upper grip element (5) and can move with respect to said at least one front post (2a) along a movement trajectory having at least one component that is parallel to the direction of main extension of said at least one front post (2a), in order to move between an active condition, in which said grip element (5) is spaced and arranged upward with respect to the end portion of said lower framework (2) that is uppermost during use, and an inactive condition, in which said grip element (5) is arranged so as to be close to said end portion of said lower framework (2) that is uppermost during use, said lower framework (2) supporting an actuation device (10) which is provided with an actuation grip element (11), which can move on command between a first position and a second position, said actuation device (10) being connected kinematically to at least one interconnection device (12) for interconnection between said at least one rear post (2b) and at least one respective front post (2a) in order to pass, as a consequence of the transition of said actuation grip element (11) between said first position and said second position, between an extended position, in which the respective front and rear posts (2a, 2b) are kept angularly spaced, and a folded position, in which the respective front and rear posts (2a, 2b) are kept angularly close, there being at least one first locking body (21), kinematically connected to said actuation grip element (11), for locking said interconnection device (12) in the extended position and at least one second locking body (22) which acts between said at least one front post (2a) and the respective handle tube (4), in order to keep said handle tube (4) locked in said active position, **characterized in that** said interconnection device (12) comprises a toggle device which comprises a first connecting body (13) and a second connecting body (14), said first connecting body (13) having a first end (13a) which is pivoted, about a third articulation axis (103) which is substantially parallel to said first articulation axis (101), to a respective rear post (2b), and a second end (13b) which is pivoted to said second connecting body (14) about a fourth articulation axis (104) which is substantially parallel to said third articulation axis (103), said second connecting body (14) being supported so that it can rotate, about a fifth articulation axis (105) which is substantially parallel to said third and fourth articulation axes (103, 104), by the respective front post (2a).

2. The folding frame (1) according to claim 1, **characterized in that** said actuation grip element (11) is supported by said interconnection device (12).

3. The folding frame (1) according to claim 2, **characterized in that** said actuation grip element (11) is supported so that it can rotate by said interconnection device (12) about a second articulation axis (102) that is substantially parallel to said first articulation axis (101).

4. The folding frame (1) according to one or more of the preceding claims, **characterized in that** said second locking body (22) is connected kinematically to said actuation grip element (11). .

5. The folding frame (1) according to one or more of the preceding claims, **characterized in that** it comprises at least one element (23) for interconnection between said at least one rear post (2b) and said at least one handle tube (4), which is adapted to determine the movement of said handle tube (4) between said inactive position and said active position and vice versa as a consequence of the transition of said interconnection device (12) between said extended condition and said folded condition and vice versa.

6. The folding frame (1) according to claim 3, **characterized in that** said actuation grip element (11) is supported by said lower framework (2) so that it can rotate about said second articulation axis (102) which is substantially parallel to said first articulation axis (101).

7. The folding frame (1) according to one or more of the preceding claims, **characterized in that** said second connecting body (14) is supported, so that it can rotate about said fifth articulation axis (105), by a coupling body (15) which is integral with a front post (2a).

8. The folding frame (1) according to claim 7, **characterized in that** said second locking body (22) comprises at least one locking pin (22a) that is supported by said coupling body (15) and is adapted to pass between a condition of disengagement with the respective handle tube (4) and a position of engagement with the respective handle tube (4) as a consequence of the movement of said folding frame (1) from said closed condition toward said open condition.

9. The folding frame (1) according to claim 8, **characterized in that** said first locking body (21) comprises a hook (21a) that is supported by said second connecting body (14) and is adapted to pass between an uncoupling condition and a coupling condition with a respective abutment (21b) supported by said first connecting body (13) as a consequence of the transition of said interconnection device (12) between said folded condition and said extended condition and vice versa.

10. The folding frame (1) according to claim 9, **characterized in that** said actuation grip element (11) is connected kinematically to said first locking body (21) and to said second locking body (22).

11. The folding frame (1) according to claim 10, **characterized in that** said actuation grip element (11) is connected kinematically to a pusher body (40) which has an elongated extension and has a first end (40a) that is associated rotatably, eccentrically with respect to said second articulation axis (102), with said actuation grip element (11), and a second end (40b), which is connected kinematically to said second locking body (22), along the extension of said pusher body (40) there being an engagement element (41) for engagement with said first locking body (21).

12. The folding frame (1) according to claim 11, **characterized in that** said engagement element (41) comprises a protrusion which is arranged laterally adjacent to the respective hook (21a) and is designed, when said actuation grip element (11) is moved from the first position toward the second position, to act on said hook (21a) in contrast with the action of a first elastic loading device (21c) in order to disengage said hook (21a) from the respective abutment (21b), so as to allow accordingly the relative rotation between said rear post (2b) and the respective first connecting body (13) about the third articulation axis (103) and between said first connecting body (13) and the respective second connecting body (14) about the fourth articulation axis (104).

13. The folding frame (1) according to claim 12, **characterized in that** substantially at said second end (40b) said pusher body (40) has an inclined portion (42) which engages a rocker element (43) so that when said actuation grip element (11) is moved from the first position toward the second position traction is applied to said locking pin (22a) in contrast with the action of a second elastic loading device (22c) in order to disengage an engagement head (22a') of said locking pin (22a) from a second seat formed on the respective handle tube (4) so as to allow, accordingly, the passage of the handle tubes (4) from the active condition to the inactive position.

## Patentansprüche

1. Ein Faltrahmen (1) für Kinderwägen oder dergleichen, der einen unteren Rahmen (2) umfasst, ausgestattet mit mindestens einem vorderen Ständer (2a) und mindestens einem hinteren Ständer (2b), die in einem unteren Bereich mit entsprechenden Radaufbauten (3a, 3b) verbunden sind, wobei der mindestens eine hintere Ständer (2b) auf Befehl mit Bezug auf den mindestens einen vorderen Ständer (2a) mit einer Drehbewegung um eine erste Gelenkachse (101) beweglich ist, die im Wesentlichen quer zur Richtung der Längsausrichtung (100) des Faltrahmens (1) während des Übergangs des Faltrahmens (1) aus einem ausgeklappten offenen Zustand in einen zusammengeklappten geschlossenen Zustand und umgekehrt ist, wobei der untere Rahmen (2) kinematisch mit mindestens einem Schiebegriffrohr (4) verbunden ist, das mindestens ein oberes Griffelement (5) bildet und sich mit Bezug auf den mindestens einen vorderen Ständer (2a) entlang einer Bewegungstrajektorie bewegen kann, die mindestens eine Komponente hat, welche parallel zur Richtung der Hauptausdehnung des mindestens einen vorderen Ständers (2a) ist, um sich zwischen einem aktiven Zustand, in welchem das Griffelement (5) mit Bezug auf den Endabschnitt des unteren Rahmens (2) der während des Gebrauchs am höchsten liegt beabstandet und oberhalb desselben angeordnet ist und einem inaktiven Zustand zu bewegen, in welchem das Griffelement (5) angeordnet ist, um nahe dem Endabschnitt des unteren Rahmens (2) zu sein, der während des Gebrauchs am höchsten ist, wobei der untere Rahmen (2) eine Betätigungsvorrichtung (10) trägt, die mit einem Betätigungsgriffelement (11) ausgestattet ist, der sich auf Befehl zwischen einer ersten Position und einer zweiten Position bewegen kann, wobei die Betätigungsvorrichtung (10) kinematisch mit mindestens einer Zwischenschaltungsvorrichtung (12) für die Verbindung zwischen den mindestens einen hinteren Ständer (2b) und mindestens einem entsprechenden vorderen Ständer (2a) verbunden ist, um in Folge des Übergangs des Betätigungsgriffelements (11) zwischen der ersten Position und der zweiten Position zwischen einem ausgeklappten Zustand, in welchem der jeweilige vordere und hintere Ständer (2a, 2b) winklig beabstandet gehalten sind und einem zusammengeklappten Zustand zu wechseln, in welchem der entsprechende vordere und hintere Ständer (2a, 2b) winklig nahe beieinandergehalten sind, wobei es mindestens einen ersten Blockierkörper (21) gibt, der kinematisch mit dem Betätigungsgriffelement (11) verbunden ist, um die Zwischenschaltungsvorrichtung (12) in der ausgeklappten Position zu blockieren und mindestens einen zweiten Blockierkörper (22) der zwischen dem mindestens einen vorderen Ständer (2a) und dem entsprechenden Schiebegriffrohr (4) wirkt, um das Schiebegriffrohr (4) in der aktiven Position blockiert zu halten, **dadurch gekennzeichnet, dass** die Zwischenschaltungsvorrichtung (12) eine Kippvorrichtung umfasst, die einen ersten Verbindungskörper (13) und einen zweiten Verbindungskörper (14) umfasst, wobei der erste Verbindungskörper (13) ein erstes Ende (13a) hat, dass um eine dritte Gelenkachse (103), die im Wesentlichen parallel zu der ersten Gelenkachse (101) ist drehgelenkig mit einem entsprechenden hinteren Ständer (2b) verbunden ist und ein zweites Ende (13b), das um eine vierte Gelenkachse (104), die im Wesentlichen parallel zu der dritten Gelenkachse (103) ist, drehgelenkig mit dem zweiten Verbindungskörper (14) verbunden ist, wobei der zweite Verbindungskörper (14) von dem entsprechenden vorderen Ständer (2a) so gelagert ist, dass er sich um eine fünfte Gelenkachse (105) drehen kann, welche im Wesentlichen parallel zu der dritten und der vierten Gelenkachse (103, 104) ist.

2. Der Faltrahmen (1) gemäß Anspruch 1, **dadurch gekennzeichnet, dass** das Betätigungsgriffelement (11) von der Zwischenschaltungsvorrichtung (12) getragen ist.

3. Der Faltrahmen (1) gemäß Anspruch 2, **dadurch gekennzeichnet, dass** das Betätigungsgriffelement (11) von der Zwischenschaltungsvorrichtung (12) so getragen ist, dass es sich um eine zweite Gelenkachse (102) drehen kann, die im Wesentlichen parallel zu der ersten Gelenkachse (101) ist.

4. Der Faltrahmen (1) gemäß einem oder mehreren der obigen Ansprüche, **dadurch gekennzeichnet, dass** der zweite Blockierkörper (22) kinematisch mit dem Betätigungsgriffelement (11) verbunden ist.

5. Der Faltrahmen (1) gemäß einem oder mehreren der obigen Ansprüche, **dadurch gekennzeichnet, dass** er mindestens ein Element (23) zur Verbindung zwischen dem mindestens einen hinteren Ständer (2b) und dem mindestens einen Schiebegriffrohr (4) umfasst, welches ausgebildet ist, um die Bewegung des Schiebegriffrohrs (4) zwischen der inaktiven Position und der aktiven Position und umgekehrt in Folge des Übergangs der Zwischenschaltungsvorrichtung (12) zwischen dem ausgeklappten Zustand und dem zusammengeklappten Zustand und umgekehrt zu bestimmen.

6. Der Faltrahmen (1) gemäß Anspruch 3, **dadurch gekennzeichnet, dass** das Betätigungsgriffelement (11) von dem unteren Rahmen (2) so getragen ist, dass es sich um die zweite Gelenkachse (102) drehen kann, die im Wesentlichen parallel zu der ersten Gelenkachse (101) ist.

7. Der Faltrahmen (1) gemäß einem oder mehreren der obigen Ansprüche, **dadurch gekennzeichnet, dass** der zweite Verbindungskörper (14) von einem Kopplungskörper (15), welcher integral mit einem vorderen Ständer (2a) ist, so getragen ist, dass er sich um die fünfte Gelenkachse (105) drehen kann.

8. Der Faltrahmen (1) gemäß Anspruch 7, **dadurch gekennzeichnet, dass** der zweite Blockierkörper (22) mindestens einen Sperrstift (22a) umfasst, der von dem Kopplungskörper (15) getragen und ausgebildet ist, um zwischen einem Zustand des Nichteingreifens mit dem entsprechenden Schiebegriffrohr (4) und einem Position des Eingreifens mit dem entsprechenden Schiebegriffrohr (4) in Folge der Bewegung des Faltrahmens (1) aus dem geschlossenen Zustand in den offenen Zustand zu wechseln.

9. Der Faltrahmen (1) gemäß Anspruch 8, **dadurch gekennzeichnet, dass** der erste Blockierkörper (21) einen Haken (21a) umfasst, der von dem zweiten Verbindungskörper (14) getragen und ausgebildet ist, um zwischen einem Endkopplungszustand und einem Kopplungszustand mit einem entsprechenden Widerlager (21b) dass von dem ersten Verbindungskörper (13) getragen ist, in Folge des Übergangs der Zwischenschaltungsvorrichtung (12) zwischen dem zusammengeklappten Zustand und dem ausgeklappten Zustand und umgekehrt zu wechseln.

10. Der Faltrahmen (1) gemäß Anspruch 9, **dadurch gekennzeichnet, dass** das Betätigungsgriffelement (11) kinematisch mit dem ersten Blockierkörper (21) und mit dem zweiten Blockierkörper (22) verbunden ist.

11. Der Faltrahmen (1) gemäß Anspruch 10, **dadurch gekennzeichnet, dass** das Betätigungsgriffelement (11) kinematisch mit einem Schieberkörper (40) verbunden ist, der eine langgestreckte Ausdehnung und ein erstes Ende (40a) hat, welches drehbar, exzentrisch mit Bezug auf die zweite Gelenkachse (102), mit dem Betätigungsgriffelement (11) verbunden ist und ein zweites Ende (40b) das kinematisch mit dem zweiten Blockierkörper (22) verbunden ist, wobei sich entlang der Ausdehnung des Schieberkörpers (40) ein Eingriffselement (41) für den Eingriff für den ersten Blockierkörper (21) befindet.

12. Der Faltrahmen (1) gemäß Anspruch 11, **dadurch gekennzeichnet, dass** das Eingriffselement (41) einen Vorsprung umfasst, der seitlich angrenzend an den entsprechenden Haken (21a) angeordnet ist und konstruiert ist, um wenn das Betätigungsgriffelement (11) aus der ersten Position in die zweite Position bewegt wird, im Kontrast zur Wirkung einer ersten elastischen Spannvorrichtung (21) auf den Haken (21a) einzuwirken, um den Haken (21a) von dem entsprechenden Widerlager (21b) zu lösen, um entsprechend die Relativrotation zwischen dem hinteren Ständer (2b) und dem entsprechenden ersten Verbindungskörper (13) um die dritte Gelenkachse (103) und zwischen dem ersten Verbindungskörper (13) und dem entsprechenden zweiten Verbindungskörper (14) um die vierte Gelenkachse (104) zu ermöglichen.

13. Der Faltrahmen (1) gemäß Anspruch 12, **dadurch gekennzeichnet, dass** der Schieberkörper (40) im Wesentlichen an dem zweiten Ende (40b) einen schrägen Abschnitt (42) hat, der in Eingriff mit einem Schwingenelement (43) steht, so dass wenn das Betätigungsgriffelement (11) aus der ersten Position in die zweiten Position bewegt wird, Zug auf dem Sperrstift (22a) im Kontrast zur Wirkung einer zweiten elastischen Spannvorrichtung (22c) ausgeübt wird, um einen Eingriffskopf (22a') des Sperrstifts (22a) aus einem zweiten Sitz zu lösen, der an dem entsprechenden Schiebegriffrohr (4) geformt ist, um entsprechend den Übergang der Schiebegriffrohre (4) von dem aktiven Zustand in die inaktive Position zu ermöglichen.

## Revendications

1. Châssis pliant (1) pour poussettes, landaus ou analogue, comportant une armature inférieure (2) pourvue d'au moins un montant avant (2a) et d'au moins un montant arrière (2b) qui sont reliés dans une zone inférieure à des ensembles de roues (3a, 3b) respectifs, ledit au moins un montant arrière (2b) étant mobile sur commande, par rapport audit au moins un montant avant (2a), avec un mouvement rotatif autour d'un premier axe d'articulation (101) qui est sensiblement transversal à la direction d'extension longitudinale (100) dudit châssis pliant (1) pendant la transition dudit châssis pliant (1) d'un état ouvert déployé à un état fermé aplati et vice versa, ladite armature inférieure (2) étant cinématiquement reliée à au moins un tube de poignée (4) qui forme au moins un élément de préhension supérieur (5) et peut se déplacer par rapport audit au moins un montant avant (2a) le long d'une trajectoire de déplacement ayant au moins une composante qui est parallèle à la direction d'extension principale dudit au moins un montant avant (2a), afin de se déplacer entre un état actif, dans lequel ledit élément de préhension (5) est espacé et agencé vers le haut par rapport à la partie d'extrémité de ladite armature inférieure (2) qui est la plus haute pendant l'utilisation, et un état inactif, dans lequel ledit élément de préhension (5) est agencé de manière à être près de ladite partie d'extrémité de ladite armature inférieure (2) qui est la plus haute pendant l'utilisation, ladite armature inférieure (2) supportant un dispositif d'actionnement (10) qui est pourvu d'un élément de préhension et d'actionnement (11), qui peut se déplacer sur commande entre une première position et une seconde position, ledit dispositif d'actionnement (10) étant cinématiquement relié à au moins un dispositif d'interconnexion (12) pour une interconnexion entre lesdits au moins un montant arrière (2b) et au moins un montant avant (2a) respectif afin de passer, en conséquence de la transition dudit élément de préhension et d'actionnement (11) entre ladite première position et ladite seconde position, entre une position déployée, dans laquelle les montants avant et arrière (2a, 2b) respectifs sont maintenus angu-lairement espacés, et une position pliée, dans laquelle les montants avant et arrière (2a, 2b) respectifs sont maintenus angulairement proches, au moins un premier corps de blocage (21), cinématiquement relié audit élément de préhension et d'actionnement (11), pour bloquer ledit dispositif d'interconnexion (12) dans la position déployée et au moins un second corps de blocage (22) étant agencés, lequel second corps de blocage agit entre ledit au moins un montant avant (2a) et le tube de poignée (4) respectif, afin de maintenir ledit tube de poignée (4) bloqué dans ladite position active, **caractérisé en ce que** ledit dispositif d'interconnexion (12) comporte un dispositif à genouillère qui comporte un premier corps de liaison (13) et un second corps de liaison (14), ledit premier corps de liaison (13) ayant une première extrémité (13a) qui pivote, autour d'un troisième axe d'articulation (103) qui est sensiblement parallèle audit premier axe d'articulation (101), sur un montant arrière (2b) respectif, et une seconde extrémité (13b) qui pivote sur ledit second corps de liaison (14) autour d'un quatrième axe d'articulation (104) qui est sensiblement parallèle audit troisième axe d'articulation (103), ledit second corps de liaison (14) étant supporté de sorte qu'il peut être mis en rotation, autour d'un cinquième axe d'articulation (105) qui est sensiblement parallèle auxdits troisième et quatrième axes d'articulation (103, 104), par le montant avant (2a) respectif.

2. Châssis pliant (1) selon la revendication 1, **caractérisé en ce que** ledit élément de préhension et d'actionnement (11) est supporté par ledit dispositif d'interconnexion (12).

3. Châssis pliant (1) selon la revendication 2, **caractérisé en ce que** ledit élément de préhension et d'actionnement (11) est supporté de sorte qu'il peut être mis en rotation par ledit dispositif d'interconnexion (12) autour d'un deuxième axe d'articulation (102) qui est sensiblement parallèle audit premier axe d'articulation (101).

4. Châssis pliant (1) selon une ou plusieurs des revendications précédentes, **caractérisé en ce que** ledit second corps de blocage (22) est cinématiquement relié audit élément de préhension et d'actionnement (11).

5. Châssis pliant (1) selon une ou plusieurs des revendications précédentes, **caractérisé en ce qu'**il comporte au moins un élément (23) pour une interconnexion entre ledit au moins un montant arrière (2b) et ledit au moins un tube de poignée (4), qui est adapté pour déterminer le mouvement dudit tube de poignée (4) entre ladite position inactive et ladite position active et vice versa en conséquence de la transition dudit dispositif d'interconnexion (12) entre ledit état déployé et ledit état plié et vice versa.

6. Châssis pliant (1) selon la revendication 3, **caractérisé en ce que** ledit élément de préhension et d'actionnement (11) est supporté par ladite armature inférieure (2) de sorte qu'il peut être mis en rotation au**tour dudit deuxième axe d'articulation (102) qui est sen**siblement parallèle audit premier axe d'articulation (101) .

7. Châssis pliant (1) selon une ou plusieurs des revendications précédentes, **caractérisé en ce que** ledit second corps de liaison (14) est supporté, de sorte qu'il peut être mis en rotation autour dudit cinquième axe d'articulation (105), par un corps de couplage (15) qui est solidaire d'un montant avant (2a).

8. Châssis pliant (1) selon la revendication 7, **caractérisé en ce que** ledit second corps de blocage (22) comporte au moins une goupille de blocage (22a) qui est supportée par ledit corps de couplage (15) et est adaptée pour passer entre un état de libération du tube de poignée (4) respectif et une position de prise avec le tube de poignée (4) respectif en conséquence du mouvement dudit châssis pliant (1) dudit état fermé vers ledit état ouvert.

9. Châssis pliant (1) selon la revendication 8, **caractérisé en ce que** ledit premier corps de blocage (21) comporte un crochet (21a) qui est supporté par ledit second corps de liaison (14) et est adapté pour passer entre un état de découplage et un état de couplage avec une butée (21b) respective supportée par ledit premier corps de liaison (13) en conséquence de la transition dudit dispositif d'interconnexion (12) entre ledit état plié et ledit état déployé et vice versa.

10. Châssis pliant (1) selon la revendication 9, **caractérisé en ce que** ledit élément de préhension et d'actionnement (11) est cinématiquement relié audit premier corps de blocage (21) et audit second corps de blocage (22).

11. Châssis pliant (1) selon la revendication 10, **caractérisé en ce que** ledit élément de préhension et d'actionnement (11) est cinématiquement relié à un corps de poussée (40) qui a une extension allongée et a une première extrémité (40a) qui est associée en rotation, de manière excentrée par rapport audit deuxième axe d'articulation (102), audit élément de prise d'actionnement (11), et une seconde extrémité (40b), qui est cinématiquement reliée audit second corps de blocage (22), le long de l'extension dudit corps de poussée (40), un élément de prise (41) étant agencé pour la prise avec ledit premier corps de blocage (21).

12. Châssis pliant (1) selon la revendication 11, **caractérisé en ce que** ledit élément de prise (41) comporte une saillie qui est agencée latéralement adjacente au crochet (21a) respectif et est conçu, lorsque ledit élément de préhension et d'actionnement (11) est amené de la première position vers la seconde position, pour agir sur ledit crochet (21a) en opposition à l'action d'un premier dispositif de chargement élastique (21c) afin de libérer ledit crochet (21a) de la butée (21b) respective, de manière à permettre, par conséquent, la rotation relative entre ledit montant arrière (2b) et le premier corps de liaison (13) respectif autour du troisième axe d'articulation (103) et entre ledit premier corps de liaison (13) et le second corps de liaison (14) respectif autour du quatrième axe d'articulation (104).

13. Châssis pliant (1) selon la revendication 12, **caractérisé en ce que** pratiquement au niveau de ladite seconde extrémité (40b), ledit corps de poussée (40) a une partie inclinée (42) qui vient en contact avec un élément à bascule (43) de sorte que lorsque ledit élément de préhension et d'actionnement (11) est amené de la première position vers la seconde position, une traction est appliquée à ladite goupille de blocage (22a) en opposition à l'action d'un second dispositif de chargement élastique (22c) afin de libérer une tête de prise (22a') de ladite goupille de blocage (22a) d'un second logement formé sur le tube de poignée (4) respectif de manière à permettre, par conséquent, le passage des tubes de poignée (4) de l'état actif à l'état inactif.
